# EUROPEAN PATENT APPLICATION

(11) **EP 3 051 514 A1**
(43) Date of publication of application: **03.08.2016**
(21) Application number: 15203234.8
(22) Date of filing: 31.12.2015
(51) Int. Cl.: G08C 19/28

(54) **METHOD AND DEVICE FOR REMOTE CONTROL**

(30) Priority: 29.01.2015 CN 201510047939
(71) Applicant: Xiaomi Inc., Beijing 100085 (CN)
(72) Inventor: SUN, Guang, 100085 Beijing (CN); CAI, Renjie, 100085 Beijing (CN); LIU, Tiejun, 100085 Beijing (CN)
(74) Representative: Fontenelle, Sandrine

(57) **Abstract**

The present invention relates to a method and a device for remote control which belongs to the field of device control. The method includes: a user terminal obtaining (201, 304) motion data generated by a wearable device according to a user's motion; the user terminal generating (202) a remote control signal for controlling a home appliance according to the motion data; and the user terminal sending (203, 306) the remote control signal to the home appliance, the remote control signal being configured to control operation status of the home appliance. The present invention solves the problem of cumbersome operation steps in remote control method in related arts. Consequently, only by performing a user's motion through a wearable device, a user may remotely control a home appliance without pressing of any button for remote control.

## Description

### TECHNICAL FIELD

The present invention generally relates to the field of device control, and more particularly, to a method and a device for remote control.

### BACKGROUND

A remote controller is an electronic device for controlling operation status of a home appliance.

With increasingly incorporated functions on a home appliance, a remote controller has more and more physical buttons thereon. During the usage of the remote controller, a user has to select a corresponding physical button among a lot of physical buttons provided on the remote controller and press the selected physical button to control operation status of a home appliance. The operation steps are somewhat cumbersome.

### SUMMARY

In order to solve the problem of cumbersome operation steps in remote control method in related arts, embodiments of the present invention provide a method and a device for remote control. The technical solutions are set forth as follows:
According to a first aspect of the present invention, there is provided a method for remote control.
The method includes:
   a user terminal obtaining motion data generated by a wearable device according to a user's motion;
   the user terminal generating a remote control signal for controlling a home appliance according to the motion data; and
   the user terminal sending the remote control signal to the home appliance, the remote control signal being configured to control operation status of the home appliance.

In a particular embodiment, the generation of the remote control signal for controlling the home appliance by the user terminal according to the motion data comprises:
the user terminal querying a control instruction corresponding to the motion data from a preset correspondence which comprises at least one piece of motion data and a control instruction corresponding to each of the motion data; and
the user terminal generating the remote control signal according to the control instruction.

In an embodiment, the method further comprises:
the user terminal receiving an operation for control instruction setting which is configured to set the motion data and the control instruction corresponding to the motion data; and
the user terminal generating or updating the correspondence according to the motion data and the control instruction corresponding to the motion data.

In an embodiment, the method further comprises:
the user terminal establishing a binding relationship with the wearable device in advance.

According to a second aspect of the present invention, there is provided a method for remote control. The method includes:
a wearable device collecting motion data generated from a user's motion;
the wearable device generating, according to the motion data, a control instruction corresponding to the motion data; and
the wearable device sending a remote control signal to a home appliance according to the control instruction, the remote control signal being configured to control operation status of the home appliance.

In an embodiment, the generation of the control instruction corresponding to the motion data by the wearable device according to the motion data comprises:
the wearable device querying a control instruction corresponding to the motion data from a preset correspondence which comprises at least one piece of motion data and a control instruction corresponding to each of the motion data.

In an embodiment, the method further comprises:
the wearable device receiving an operation for control instruction setting which is configured to set the motion data and the control instruction corresponding to the motion data; and
the wearable device generating or updating the correspondence according to the motion data and
the control instruction corresponding to the motion data.

In an embodiment, the method further comprises the wearable device establishing a binding relationship with the home appliance in advance.

According to a third aspect of the present invention, there is provided a method for remote control. The method includes:
a home appliance obtaining motion data generated by collecting a user's motion through a wearable device;
the home appliance generating, according to the motion data, a control instruction corresponding to the motion data; and
the home appliance executing the control instruction.

In an embodiment, the generation of the control instruction corresponding to the motion data by the home appliance according to the motion data comprises:
the home appliance querying a control instruction corresponding to the motion data from a preset correspondence which comprises at least one piece of motion data and a control instruction corresponding to each of the motion data.

In an embodiment, the method further comprises:
the home appliance receiving an operation for control instruction setting which is configured to set the motion data and the control instruction corresponding to the motion data; and
the home appliance generating or updating the correspondence according to the motion data and
the control instruction corresponding to the motion data.

In an embodiment, the method further comprises the home appliance establishing a binding relationship with the wearable device in advance.

According to a fourth aspect of the present invention, there is provided a device for remote control.

The device is included in a user device and includes:
a first obtaining module configured to obtain motion data generated by a wearable device according to a user's motion;
a first generating module configured to generate a remote control signal for controlling a home appliance according to the motion data; and
a first control module configured to send the remote control signal to the home appliance, the remote control signal being configured to control operation status of the home appliance.

In an embodiment, the device further comprises a first binding module configured to establish a binding relationship with the wearable device in advance.

In an embodiment:
the first control module is configured to send the remote control signal to the home appliance via a wired network; or
the first control module is configured to send the remote control signal to the home appliance via a wireless fidelity WIFI network; or
the first control module is configured to send the remote control signal to the home appliance via an infrared technology; or
the first control module is configured to send the remote control signal to the home appliance via a Bluetooth technology.

According to a fifth aspect of the present invention, there is provided a device for remote control. The device for remote control is included in a wearable device and includes:
a second obtaining module configured to collect motion data generated from a user's motion;
a second generating module configured to generate, according to the motion data, a control instruction corresponding to the motion data; and
a second control module configured to send a remote control signal to a home appliance according to the control instruction.

In an embodiment, the second generating module is configured to query a control instruction corresponding to the motion data from a preset correspondence which comprises at least one piece of motion data and a control instruction corresponding to each of the motion data.

In an embodiment, the device further comprises:
a second receiving module configured to receive an operation for control instruction setting which is configured to set the motion data and the control instruction corresponding to the motion data; and
a second updating module configured to generate or update the correspondence according to the motion data and the control instruction corresponding to the motion data.

In an embodiment:
the second control module is configured to send the control instruction to a user device which generates the remote control signal for controlling the home appliance according to the control instruction and then sends the remote control signal to the home appliance; or
the second control module is configured to generate the remote control signal in a wireless fidelity WIFI form according to the control instruction and send the remote control signal to the home appliance via a WIFI network; or
the second control module is configured to generate the remote control signal in an infrared form according to the control instruction and send the remote control signal to the home appliance via an infrared technology; or
the second control module is configured to generate the remote control signal in a Bluetooth form according to the control instruction and send the remote control signal to the home appliance via a Bluetooth technology.

In an embodiment, the device further comprises a second binding module configured to establish a binding relationship with the home appliance in advance.

According to a sixth aspect of the present invention, there is provided a device for remote control. The device is included in a home appliance and includes:
a third obtaining module configured to obtain motion data generated by collecting a user's motion through a wearable device;
a third generating module configured to generate, according to the motion data, a control instruction corresponding to the motion data; and
a third control module configured to execute the control instruction.

In an embodiment, the third generating module is configured to query a control instruction corresponding to the motion data from a preset correspondence which comprises at least one piece of motion data and a control instruction corresponding to each of the motion data.

In an embodiment, the device further comprises:
a third receiving module configured to receive an operation for control instruction setting which is configured to set the motion data and the control instruction corresponding to the motion data; and
a third updating module configured to generate or update the correspondence according to the motion data and the control instruction corresponding to the motion data.

In an embodiment, the device further comprises a third binding module configured to establish a binding relationship with the wearable device in advance.

According to a seventh aspect of the present invention, there is provided a device for remote control. The device includes:
a processor; and
a memory for storing instructions executable by the processor;
wherein the processor is configured to perform:
   obtaining motion data generated by a wearable device according to a user's motion;
   generating a remote control signal for controlling a home appliance according to the motion data; and
   sending the remote control signal to the home appliance, the remote control signal being configured to control operation status of the home appliance.

According to an eighth aspect of the present invention, there is provided a device for remote control. The device includes:
a processor; and
a memory for storing instructions executable by the processor;
wherein the processor is configured to perform:
   collecting motion data generated from a user's motion;
   generating, according to the motion data, a control instruction corresponding to the motion data; and
   sending a remote control signal to a home appliance according to the control instruction, the remote control signal being configured to control operation status of the home appliance.

According to a ninth aspect of the present invention, there is provided a device for remote control. The device includes:
a processor; and
a memory for storing instructions executable by the processor;
wherein the processor is configured to perform:
   obtaining motion data generated by collecting a user's motion through a wearable device;
   generating, according to the motion data, a control instruction corresponding to the motion data; and
   executing the control instruction.

The technical solutions provided by embodiments of the present invention may have the following advantageous effects:
The present invention also provides a computer program including instructions, which when being executed on a processor of an apparatus and more particularly of a user device performs the method provided in the foregoing first aspect, and/or a computer program including instructions which when being executed on a processor of an apparatus and more particularly of a wearable device performs the method provided in the foregoing second aspect, and/or a computer program including instructions which when being executed on a processor of an apparatus and more particularly of a home appliance performs the method provided in the foregoing third aspect.

These programs can use any programming language, and be in the form of source code, object code, or code intermediate between source code and object code, such as in a partially compiled form, or in any other desirable form.

The invention also provides a computer readable data medium including instructions of a computer program as mentioned above.

The data medium may be any entity or device capable of storing the program. For example, the medium may comprise storage means, such as read only memory (ROM), e.g. a compact disk (CD) ROM or a microelectronic circuit ROM, or indeed magnetic recording means, e.g. a floppy disk or a hard disk.

Furthermore, the data medium may be a transmissible medium such as an electrical or optical signal, suitable for being conveyed via an electrical or optical cable, by radio, or by other means. The program of the invention may in particular be downloaded from an Internet type network. Alternatively, the data medium may be an integrated circuit in which the program is incorporated, the circuit being adapted to execute or to be used in the execution of the method in question.

Motion data is generated by collecting a user's motion through a wearable device, and then a home appliance is remotely controlled according to a control instruction corresponding to the motion data. Thus, the problem of cumbersome operation steps in remote control method in related arts is solved. Consequently, only by performing a user's motion through a wearable device, a user may remotely control a home appliance without pressing of any button for remote control.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the present invention.
Fig. 1A is a block diagram showing an implementation environment according to an exemplary embodiment.
Fig. 1B is a block diagram showing another implementation environment according to another exemplary embodiment.
Fig. 2 is a flowchart showing a method for remote control according to an exemplary embodiment.
Fig. 3 is a flowchart showing a method for remote control according to another exemplary embodiment.
Fig. 4 is a diagram showing a scenario when the method for remote control provided by the embodiment in Fig. 3 is implemented.
Fig. 5 is a flowchart showing a method for remote control according to another exemplary embodiment.
Fig. 6 is a flowchart showing a method for remote control according to another exemplary embodiment.
Fig. 7A is a schematic diagram showing an interface when the method for remote control provided by the embodiment in Fig. 6 is implemented.
Fig. 7B is a schematic diagram showing another interface when the method for remote control provided by the embodiment in Fig. 6 is implemented.
Fig. 8 is a flowchart showing a method for remote control according to another exemplary embodiment.
Fig. 9 is a flowchart showing a method for remote control according to another exemplary embodiment.
Fig. 10 is a diagram showing a scenario when the method for remote control provided by the embodiment in Fig. 9 is implemented.
Fig. 11 is a block diagram showing a device for remote control according to another exemplary embodiment.
Fig. 12 is a block diagram showing a device for remote control according to another exemplary embodiment.
Fig. 13 is a block diagram showing a device for remote control according to another exemplary embodiment.
Fig. 14 is a block diagram showing a device for remote control according to another exemplary embodiment.
Fig. 15 is a block diagram showing a device for remote control according to another exemplary embodiment.
Fig. 16 is a block diagram showing a device for remote control according to another exemplary embodiment.
Fig. 17 is a block diagram showing a device for remote control according to another exemplary embodiment.
Fig. 18 is a block diagram showing a device for remote control according to another exemplary embodiment.
Fig. 19 is a block diagram showing a device for remote control according to another exemplary embodiment.

Through the above accompany drawings, the specific embodiments of the present invention have been shown, for which a more detailed description will be given as below. These drawings and textual description are not intended to limit the scope of the concept of the present invention in any manner, but to explain the concept of the present invention to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

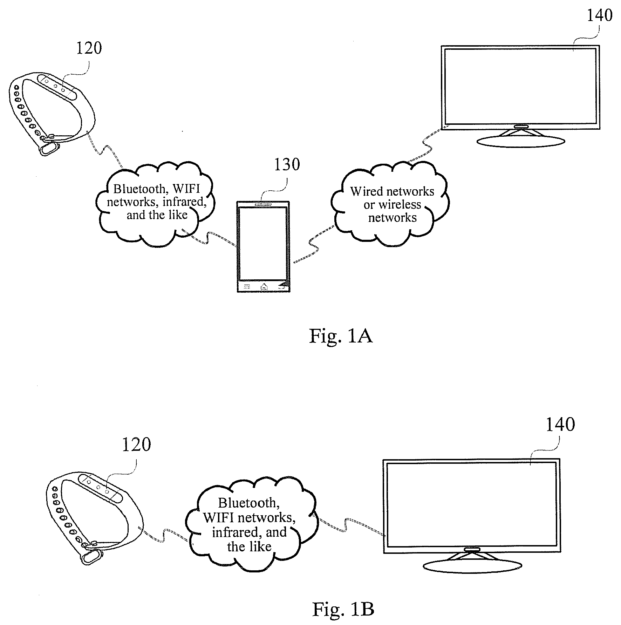

Fig. 1A is a block diagram showing an implementation environment according to an exemplary embodiment. The implementation environment includes a wearable device 120, a user device 130 and a home appliance 140.

The wearable device 120 may be a smart band, a smart glove, a smart watch, a smart ring and smart clothing, and so on. Usually, various sensors are provided in the wearable device 120, for example, a gravity acceleration sensor, a gyro sensor, and so on. The wearable device 120 is capable of collecting motion data generated from a user's motion through the built-in sensors. The user's motion may be various gestures/actions. In the illustration in Fig. 1A, the wearable device 120 is shown as a smart band.

The wearable device 120 may be coupled with the user device 130 via Bluetooth or WIFI (Wireless Fidelity) technologies.

The user device 130 may be an electronic device capable of communicating with the wearable device 120 and meanwhile with the home appliance 140. The user device 130 may be a smart phone, a smart router, a tablet computer, a server, a remote controller provided by the home appliance 140, and so on. In the illustration in Fig. 1A, the user device 130 is shown as a smart phone.

The home appliance 140 may be a smart TV, an air conditioner, a refrigerator, a washing machine and so on. In the illustration in Fig. 1A, the home appliance 140 is shown as a smart TV.

Fig. 1B is a block diagram showing an implementation environment according to another exemplary embodiment. The implementation environment may include a wearable device 120 and a home appliance 140.

The wearable device 120 may be a smart band, a smart glove, a smart watch, a smart ring and smart clothing, and so on. Usually, various sensors are provided in the wearable device 120, for example, a gravity acceleration sensor, a gyro sensor, and so on. The wearable device 120 is capable of collecting motion data generated from a user's motion through the built-in sensors. The user's motion may be various gestures/actions. In the illustration in Fig. 1B, the wearable device 120 is shown as a smart band.

The wearable device 120 may be coupled with the home appliance 140 via Bluetooth or WIFI technologies.

The home appliance 140 may be a TV, an air conditioner, a refrigerator, a washing machine and so on. In the illustration in Fig. 1B, the home appliance 140 is shown as a smart TV.

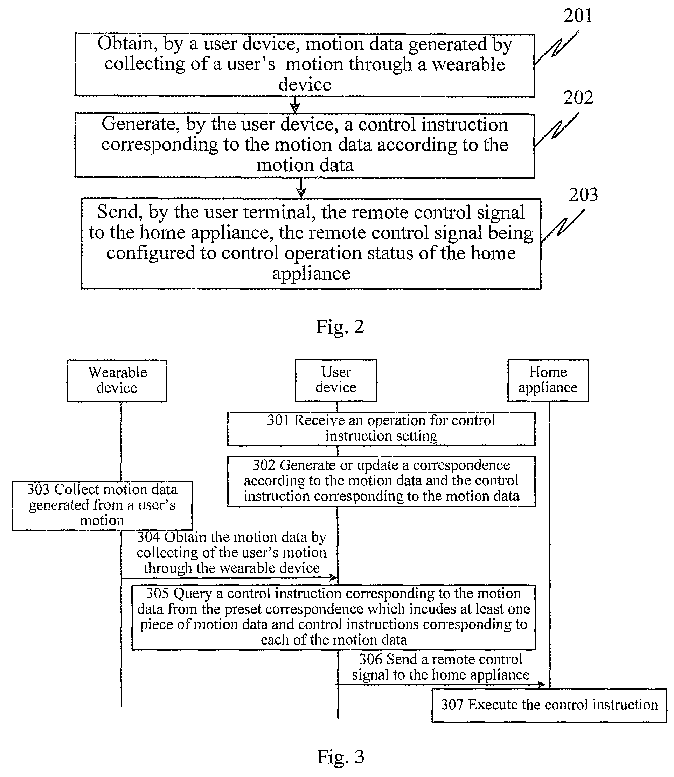

Fig. 2 is a flowchart showing a method for remote control according to an exemplary embodiment. The present embodiment is illustrated by taking an example where the method for remote control is applied in the user device as shown in Fig. 1A or 1B. The method for remote control includes the following steps.

In step 201, a user terminal obtains motion data generated by a wearable device according to a user's motion.

In step 202, the user terminal generates a remote control signal for controlling a home appliance according to the motion data.

In step 203, the user terminal sends the remote control signal to the home appliance. The remote control signal is configured to control operation status of the home appliance.

In conclusion, in the method for remote control provided by the present embodiment, motion data is generated by collecting a user's motion through a wearable device, and then a user device generates a remote control signal for controlling a home appliance according to the motion data and sends the remote control signal to the home appliance. Thus, the problem of cumbersome operation steps in remote control method in related arts is solved. Consequently, only by performing a user's motion through a wearable device, a user may remotely control a home appliance.

Fig. 3 is a flowchart showing a method for remote control according to another exemplary embodiment. The present embodiment is illustrated by taking an example where the method for remote control is applied in the user device as shown in Fig. 1A or 1B. The method for remote control includes the following steps.

In step 301, the user device receives an operation for control instruction setting.

The user device receives an operation for control instruction setting from a user. The operation for control instruction setting is configured to set motion data and a control instruction corresponding to the motion data. The motion data is sensor data generated in a wearable device from a user's motion. The control instruction is an instruction for controlling a home appliance.

When the user device is a device including components for user interaction, for example, a smart phone including a display screen, the step may include the following steps.
(1) The user device receives a selection operation by which the user selects a target control instruction from at least one preset control instruction.
(2) The user device displays a motion collecting prompt for collecting the motion data generated from the user's motion.

When the user device is a device including no component for user interaction, for example, a smart router including no touch screen and no button, the step may include the following steps.
(1) The user device establishes a connection with a configuration terminal which may be a personal computer of the user.
(2) The user device receives an operation for control instruction setting triggered by the user via the configuration terminal.

In step 302, the user device generates or updates a correspondence according to the motion data and the control instruction corresponding to the motion data.

When the user device has no correspondence between motion data and control instructions stored therein, the home appliance generates a correspondence according to the motion data and the control instruction corresponding to the motion data.

When the user device has the correspondence between motion data and control instructions stored therein, the home appliance updates the correspondence according to the motion data and the control instruction corresponding to the motion data.

An exemplary correspondence among user's motions, motion data and control instructions is shown in Table 1 as below. The user device may have the correspondence between motion data and control instructions stored therein.

**Table 1**

| user's motion | motion data corresponding to the user's motions | control instructions corresponding to the motion data |
|---|---|---|
| →↓ | "right+down" motion data | boot instruction |
| ↑ | "up" motion data | instruction for volume increase |
| ↓ | "down" motion data | instruction for volume decrease |
| ↘↗↘ | "right up+right down+right up" motion data | media source switching |
| →↙→ | "right+left down+right" motion data | channel switching |

The above steps are optional. That is to say, the correspondence between motion data and control instructions may be set by user defining or may be preset in the user device by manufactures and then a user may directly use such correspondence.

In step 303, the wearable device collects motion data generated from a user's motion.

During the usage of a home appliance by a user, if the user wants to perform remote control on the home appliance, he/she may perform a user's motion through the wearable device and the wearable device may collect the motion data generated from the user's motion.

For example, if the user performs a user's motion "↓" through his/her worn smart band, the wearable device may collect the motion data corresponding to the user's motion "↓".

In step 304, the user device obtains the motion data generated by collecting the user's motion through the wearable device.

The user device may employ any one of the following three obtaining approaches to obtain the motion data from the wearable device.

First Approach: the user device obtains the motion data collected by the wearable device via a WIFI network.

Second Approach: the user device obtains the motion data collected by the wearable device via an infrared technology.

Third Approach: the user device obtains the motion data collected by the wearable device via a Bluetooth technology.

In step 305, the user device queries a control instruction corresponding to the motion data from the preset correspondence which incudes at least one piece of motion data and control instructions corresponding to each of the motion data.

The user device may, according to the motion data collected by the wearable device, query a control instruction corresponding to the motion data from the preset correspondence.

For example, if the wearable device collects motion data corresponding to the user's motion "↓", the user device may query a control instruction corresponding to the motion data (i.e., "instruction for volume decrease") from the correspondence as shown in Table 1.

In step 306, the user device sends a remote control signal to the home appliance.

The user device generates a remote control signal according to the control instruction and then sends the remote control signal to the home appliance. This step may be implemented by any one of the following four sending approaches.

### First Sending Approach

The user device sends the remote control signal to the home appliance via a wired network. For example, the user device is a smart router which is connected with a smart TV via a wired network and the smart router may send the remote control signal to the smart TV via the wired network.

### Second Sending Approach

The user device sends the remote control signal to the home appliance via a WIFI network. For example, if the user device is a smart router which is connected with a smart TV via a WIFI network, the smart router may send the remote control signal to the smart TV via the WIFI network.

### Third Sending Approach

The user device sends the remote control signal to the home appliance via an infrared technology. For example, if the user device is a smart phone capable of performing infrared remote control, the smart phone may send the remote control signal to the home appliance via an infrared technology.

### Fourth Sending Approach

The user device may send the remote control signal to the home appliance via a Bluetooth technology. For example, the user device is a smart phone having a Bluetooth function which is connected to a smart TV via a Bluetooth technology, the smart phone may send the remote control signal to the home appliance via the Bluetooth technology.

Correspondingly, the home appliance may receive the remote control signal.

In step 307, the home appliance executes the control instruction.

For example, the home appliance may execute the "instruction for volume decrease".

In conclusion, in the method for remote control provided by the embodiment, motion data is generated by collecting a user's motion through a wearable device, and then a user device generates a remote control signal for controlling a home appliance according to the motion data and sends the remote control signal to the home appliance. Thus, the problem of cumbersome operation steps in remote control method in related arts is solved. Consequently, only by performing a user's motion through a wearable device, a user may remotely control a home appliance without pressing of any button for remote control.

In the method for remote control provided by the present embodiment, by the user defined correspondence between motion data and control instructions, a user may perform remote control on a home appliance by user defined motions.

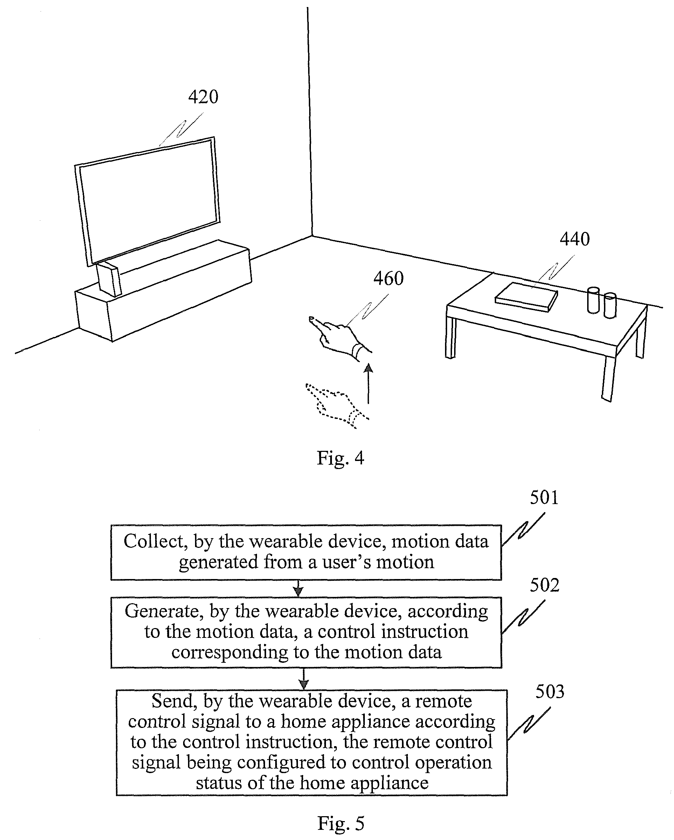

Referring to Fig. 4, in an exemplary embodiment, a smart TV 420 and a smart router 440 supporting a WIFI technology are mounted in home of a user. Further, the user also uses a smart band 460. The smart router 440 is configured in advance to store the motion data triggered in the smart band 460 by the user's gesture and the control instruction of the smart TV 420 correspondingly. When the user wants to perform remote control on the smart TV 420, the user may perform a user gesture, for example, an up gesture as shown in Fig. 4. The smart band 460 sends the motion data generated by the user gesture to the smart router 440. The smart router 440 queries the control instruction corresponding to the motion data and then sends the control instruction to the smart TV 420 via the WIFI network. The smart TV 420 correspondingly increases the volume. Under such implantation scenario, since it is required that the smart TV 420 and the smart band 460 have their inherent function but to not have to possess improved functions and corresponding functions may be added in the smart router 440 side only, the present embodiment has good applicability. Rather, the smart router 440 may be replaced by a smart phone or a tablet computer of the user.

Fig. 5 is a flowchart showing a method for remote control according to another exemplary embodiment. The present embodiment is illustrated by taking an example where the method for remote control is applied in the wearable device as shown in Fig. 1A or 1B. The method for remote control includes the following steps.

In step 501, the wearable device collects motion data generated from a user's motion.

In step 502, the wearable device generates, according to the motion data, a control instruction corresponding to the motion data.

In step 503, the wearable device sends a remote control signal to a home appliance according to the control instruction. The remote control signal is configured to control operation status of the home appliance.

In conclusion, in the method for remote control provided by the present embodiment, motion data is generated by collecting a user's motion through a wearable device, and then a home appliance is remotely controlled according to a control instruction corresponding to the motion data. Thus, the problem of cumbersome operation steps in remote control method in related arts is solved. Consequently, only by performing a user's motion through a wearable device, a user may remotely control a home appliance without pressing of any button for remote control.

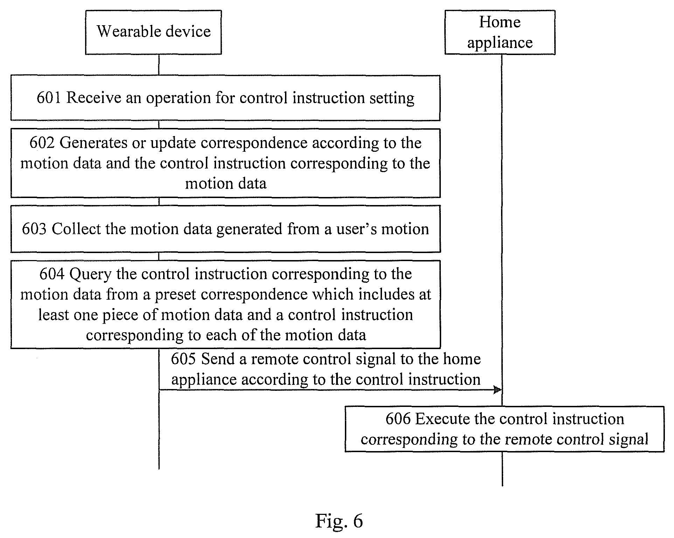

Fig. 6 is a flowchart showing a method for remote control according to another exemplary embodiment. The present embodiment is illustrated by taking an example where the method for remote control is applied in the implementation environment as shown in Fig. 1A or 1B. The method for remote control includes the following steps.

In step 601, a wearable device receives an operation for control instruction setting.

The wearable device receives an operation for control instruction setting from a user. The operation for control instruction setting is configured to set motion data and a control instruction corresponding to the motion data. The motion data is sensor data generated in a wearable device from a user's motion. The control instruction is an instruction for controlling a home appliance.

If the wearable device is a wearable device including components for user interaction, for example, a smart watch including a touch screen, the step may include the following steps.
(1) The wearable device receives a selection operation by which the user selects a target control instruction from at least one preset control instruction.
(2) The wearable device displays a motion collecting prompt for collecting the motion data generated from the user's motion.

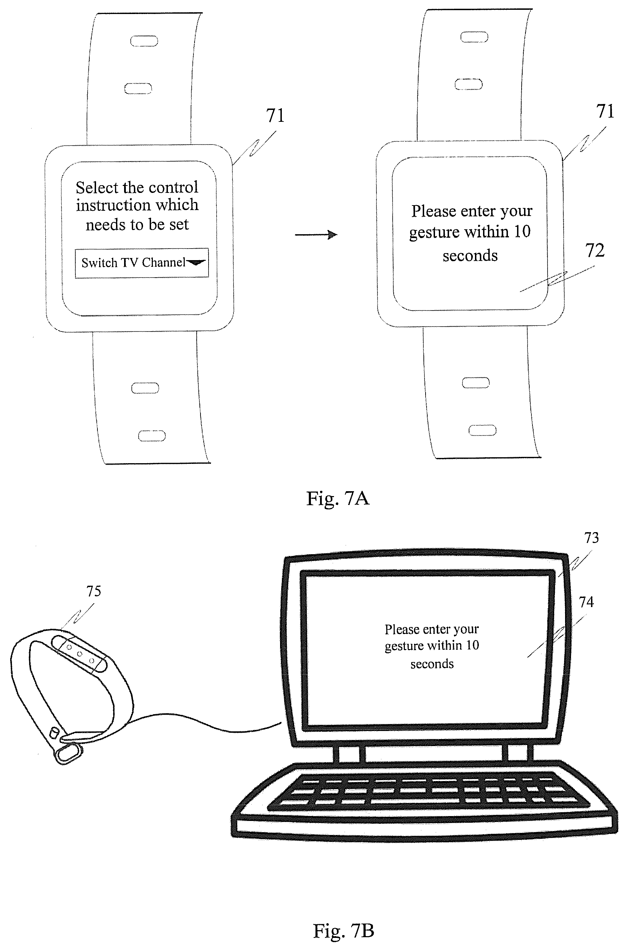

Referring to Fig. 7A, in an example where the wearable device is a smart watch and the home appliance is a smart TV, a user selects a control instruction, "Switch TV Channel", on the smart watch 71 as a target control instruction. Then, the smart watch 71 displays a motion collecting prompt 72: "Please enter your gesture within 10 seconds". Then, the user performs a self-defined gesture and the smart watch 71 collects the sensor data generated from the gesture as the motion data.

If the wearable device is a wearable device including no component for user interaction, for example, a smart band including no touch screen and no button, the step may include the following steps.
(1) The wearable device establishes a connection with a configuration terminal which may be a personal computer of the user.
(2) The wearable device receives an operation for control instruction setting triggered by the user via the configuration terminal.

Referring to Fig. 7B, in an example where the wearable device is a smart band and the configuration terminal is a personal computer of a user, the user selects a control instruction, "Switch TV Channel", on this personal computer 73 as a target control instruction. Then the personal computer 73 displays a motion collecting prompt 74: "Please enter your gesture within 10 seconds". Then, the user performs a self-defined gesture and the smart band 75 collects the sensor data generated from the gesture as the motion data.

In step 602, the wearable device generates or updates a correspondence according to the motion data and the control instruction corresponding to the motion data.

When the wearable device has no correspondence between motion data and control instructions stored therein, the wearable device generates a correspondence according to the motion data and the control instruction corresponding to the motion data.

When the wearable device has the correspondence between motion data and control instructions stored therein, the wearable device updates the correspondence according to the motion data and the control instruction corresponding to the motion data.

An exemplary correspondence among user's motions, motion data and control instructions is shown in Table 2 as below. The wearable device may have the correspondence between motion data and control instructions stored therein.

**Table 2**

| user's motion | motion data corresponding to the user's motions | control instructions corresponding to the motion data |
|---|---|---|
| ↓↘↑ | "down+right down+up" motion data | boot control instruction |
| →↓ | "right+down" motion data | boot instruction |
| ↑ | "up" motion data | instruction for volume increase |
| ↓ | "down" motion data | instruction for volume decrease |
| ↘↗↘ | "right up+right down+right up" motion data | media source switching |
| →↙→ | "right+left down+right" motion data | channel switching |

The above steps are optional. That is to say, the correspondence between motion data and control instructions may be set by user defining or may be preset in the wearable device by manufactures and then a user may directly use such correspondence.

In step 603, the wearable device collects motion data generated from a user's motion.

During the usage of a home appliance by a user, if the user wants to perform remote control on the home appliance, he/she may perform a user's motion through the wearable device and the wearable device may collect the motion data generated from the user's motion.

For example, if the user performs a user's motion "↑" through his/her worn smart band, the wearable device may collect the motion data corresponding to the user's motion "↑".

In step 604, the wearable device queries a control instruction corresponding to the motion data from the preset correspondence which includes at least one piece of motion data and control instructions corresponding to each of the motion data.

The wearable device may, according to the motion data collected by the wearable device, query a control instruction corresponding to the motion data from the preset correspondence.

For example, if the wearable device collects motion data corresponding to the user's motion "↑", the wearable device may query a control instruction corresponding to the motion data (i.e., "instruction for volume increase") from the correspondence as shown in Table 2.

In step 605, the wearable device sends a remote control signal to the home appliance according to the control instruction.

The wearable device may send a remote control signal to the home appliance according to the control instruction.

This step may be implemented by any one of the following approaches.

### First Approach

The wearable device sends the control instruction to a user device which generates the remote control signal for controlling the home appliance according to the control instruction and then sends the remote control signal to the home appliance. In other word, with respect to the user device side, the user device may obtain the motion data generated by collecting the user's motion through the wearable device. When the motion data is the queried control instruction corresponding to the motion data generated by collecting the user's motion through the wearable device, the user device generates the remote control signal for controlling the home appliance according to the control instruction and sends the remote control signal to the home appliance.

### Second Approach

The wearable device generates the remote control signal in a WIFI form according to the control instruction and sends the remote control signal to the home appliance via a WIFI network.

### Third Approach

The wearable device generates the remote control signal in an infrared form according to the control instruction and sends the remote control signal to the home appliance via an infrared technology.

### Fourth Approach

The wearable device generates the remote control signal in a Bluetooth form according to the control instruction and sends the remote control signal to the home appliance via a Bluetooth technology. In step 606, the home appliance executes the control instruction corresponding to the remote control signal.

The home appliance parses the control instruction from the remote control signal and executes the control instruction.

In conclusion, in the method for remote control provided by the present embodiment, motion data is generated by collecting a user's motion through a wearable device, and then a home appliance is remotely controlled according to a control instruction corresponding to the motion data. Thus, the problem of cumbersome operation steps in remote control method in related arts is solved. Consequently, only by performing a user's motion through a wearable device, a user may remotely control a home appliance without pressing of any button for remote control.

In the method for remote control provided by the present embodiment, by the user defined correspondence between motion data and control instructions, a user may perform remote control on a home appliance by user defined motions.

As a possible implementation, the correspondence between motion data and control instructions may be stored on the home appliance side.

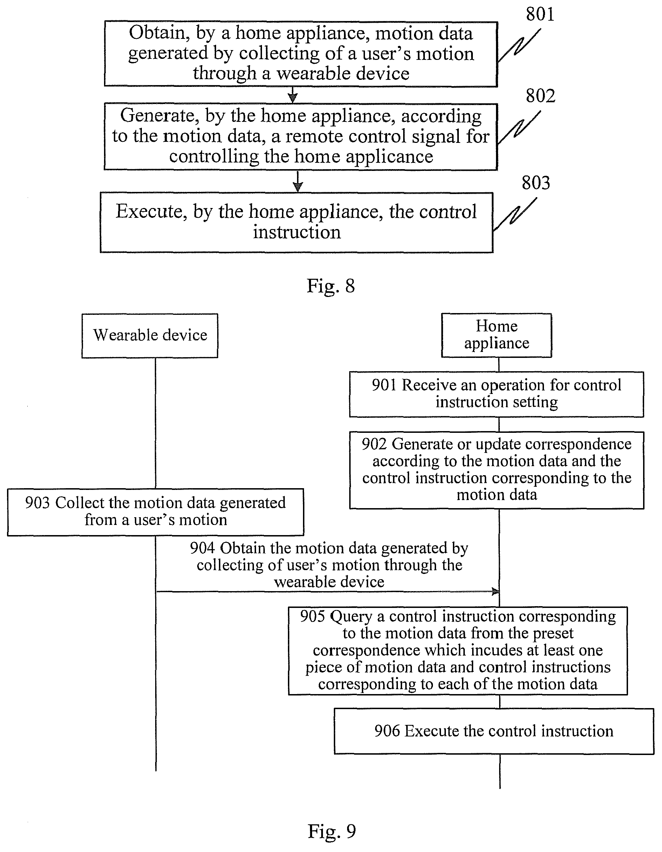

Fig. 8 is a flowchart showing a method for remote control according to another exemplary embodiment. The present embodiment is illustrated by taking an example where the method for remote control is applied in the home appliance as shown in Fig. 1A or 1B. The method for remote control includes the following steps.

In step 801, the home appliance obtains motion data generated by collecting a user's motion through a wearable device.

In step 802, the home appliance generates, according to the motion data, a control instruction corresponding to the motion data.

In step 803, the home appliance executes the control instruction.

In conclusion, in the method for remote control provided by the present embodiment, motion data is generated by collecting a user's motion through a wearable device, and then a home appliance generates a corresponding control instruction according to the motion data and executes this control instruction. Thus, the problem of cumbersome operation steps in remote control method in related arts is solved. Consequently, only by performing a user's motion through a wearable device, a user may remotely control a home appliance without pressing of any button for remote control.

Fig. 9 is a flowchart showing a method for remote control according to another exemplary embodiment. The present embodiment is illustrated by taking an example where the method for remote control is applied in the home appliance as shown in Fig. 1A or 1B. The method for remote control includes the following steps.

In step 901, the home appliance receives an operation for control instruction setting.

The home appliance receives an operation for control instruction setting from a user. The operation for control instruction setting is configured to set motion data and a control instruction corresponding to the motion data. The motion data is sensor data generated in a wearable device from a user's motion. The control instruction is an instruction for controlling a home appliance.

When the home appliance is a device including components for user interaction, for example, a smart TV including a display screen, the step may include the following steps:
(1) The home appliance receives a selection operation by which the user selects a target control instruction from at least one preset control instruction.
(2) The home appliance displays a motion collecting prompt for collecting the motion data generated from the user's motion.

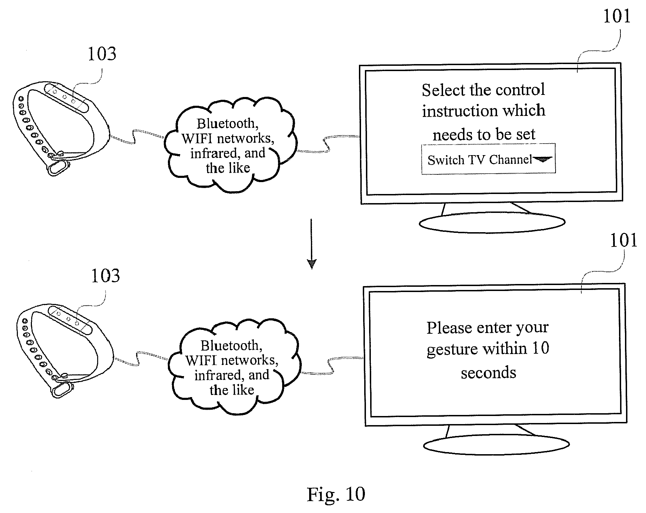

Referring to Fig. 10, in an example where the wearable device is a smart watch and the home appliance is a smart TV, the user selects a control instruction, "Switch TV Channel", on the smart TV 101 as a target control instruction. Then, the smart TV 101 displays a motion collecting prompt 102: "Please enter your gesture within 10 seconds". Then, the user performs a self-defined gesture and the smart watch 103 collects the sensor data generated from the gesture as the motion data and sends the data to the smart TV 101.

If the home appliance is a device including no component for user interaction, for example, a smart bulb including no touch screen and no button, the step may the following steps.
(1) The home appliance establishes a connection with a configuration terminal which may be a personal computer of the user.
(2) The home appliance receives an operation for control instruction setting triggered by the user via the configuration terminal.

In step 902, the home appliance generates or updates a correspondence according to the motion data and the control instruction corresponding to the motion data.

When the home appliance has no correspondence between motion data and control instructions stored therein, the home appliance generates a correspondence according to the motion data and the control instruction corresponding to the motion data.

When the home appliance has the correspondence between motion data and control instructions stored therein, the home appliance updates the correspondence according to the motion data and the control instruction corresponding to the motion data.

An exemplary correspondence among user's motions, motion data and control instructions is shown in Table 1 as below. The home appliance may have the correspondence between motion data and control instructions stored therein.

The above steps are optional. That is to say, the correspondence between motion data and control instructions may be set by user defining or may be preset in the home appliance by manufactures and then a user may directly use such correspondence.

In step 903, the wearable device collects motion data generated from a user's motion.

During the usage of a home appliance by a user, if the user wants to perform remote control on the home appliance, he/she may perform a user's motion through the wearable device and the wearable device may collect the motion data generated from the user's motion.

For example, if the user performs a user's motion "↑" through his/her worn smart band, the wearable device may collect the motion data corresponding to the user's motion "↑".

In step 904, the home appliance obtains the motion data generated by collecting the user's motion through the wearable device.

If the home appliance is capable of directly communicating with the wearable device, the home appliance may directly obtain the motion data generated by collecting the user's motion through the wearable device. The home appliance may employ any one of the following three approaches: First Obtaining Approach: the home appliance may obtain the motion data collected by the wearable device via a WIFI network.

Second Obtaining Approach: the home appliance may obtain the motion data collected by the wearable device via an infrared technology.

Third Obtaining Approach: the home appliance may obtain the motion data collected by the wearable device via a Bluetooth technology.

If the home appliance is incapable of directly communicating with the wearable device, the home appliance may obtain, via the user device, the motion data generated by collecting the user's motion through the wearable device. That is, the home appliance receives the motion data, which is sent from the wearable device to the user device, sent from the user device.

In step 905, the home appliance queries a control instruction corresponding to the motion data from the preset correspondence which incudes at least one piece of motion data and control instructions corresponding to each of the motion data.

The home appliance, according to the motion data collected by the wearable device, queries a control instruction corresponding to the motion data from the preset correspondence For example, if the wearable device collects motion data corresponding to the user's motion "↑", the home appliance may query a control instruction corresponding to the motion data (i.e., "instruction for volume increase") from the correspondence as shown in Table 1.

In step 906, the home appliance executes the control instruction.

For example, the home appliance executes the "instruction for volume increase".

In conclusion, in the method for remote control provided by the present embodiment, motion data is generated by collecting a user's motion through a wearable device, and then a home appliance generates a corresponding control instruction according to the motion data and executes this control instruction. Thus, the problem of cumbersome operation steps in remote control method in related arts is solved. Consequently, only by performing a user's motion through a wearable device, a user may remotely control a home appliance without pressing of any button for remote control.

In the method for remote control provided by the present embodiment, by the user defined correspondence between motion data and control instructions, a user may perform remote control on a home appliance by user defined motions.

In the implementation environment as shown in Fig. 1A, a binding relationship between the wearable device and the user device may be established in advance, and a binding relationship between the user device and the home appliance may be established in advance. Thus, the user device may only receive the motion data from a wearable device which is bound to the user device, and the home appliance may only receive the remote control signal from a user device which is bound to the home appliance.

In the embodiments of the present invention, the binding between a wearable device and a user device may be implemented by any one of the following four approaches.

### First Approach

The user device may obtain the ID (IDentifier) of the wearable device and bind the ID with the user device itself. The ID of the wearable device may be a two-dimension code adhered to the outside surface of the wearable device, and the user device may obtain the ID by scanning the two-dimension code.

### Second Approach

The wearable device sends an ID of the wearable device and a user account to a server (not shown in Figs. 1A and 1B), and meanwhile the user device sends an ID of the user device and the user account to the server. The server binds the wearable device, the user device and the user account according to the ID of the wearable device, the ID of the user device and the user account.

### Third Approach

The wearable device sends an ID of the wearable device and a user account to a server via a bound relay terminal, and meanwhile the user device sends an ID of the user device and the user account to the server. The server binds the wearable device, the user device and the user account according to the ID of the wearable device, the ID of the user device and the user account.

### Fourth Approach

The wearable device sends an ID of the wearable device and a user account to a server via the user device, and meanwhile the user device sends an ID of the user device and the user account to the server. The server binds the wearable device, the user device and the user account according to the ID of the wearable device, the ID of the user device and the user account.

In the embodiments of the present invention, the binding between a user device and a home appliance may be implemented by any one of the following four approaches.

### First Approach

The user device obtains an ID of the home appliance and binds the ID with the user device itself. The ID of the home appliance may be a two-dimension code adhered to the outside surface of the home appliance, and the user device may obtain the ID of the home appliance by scanning the two-dimension code. For example, the user device may be a smart phone and the home appliance may be an air conditioner.

### Second Approach

The home appliance obtains an ID of the user device and binds the ID with the home appliance itself. The ID of the user device may be a two-dimension code adhered to the outside surface of the user device, and the home appliance may obtain the ID of the user device by scanning the two-dimension code. For example, the home appliance may be a smart TV and the user device may be a smart router.

### Third Approach

The home appliance sends an ID of the home appliance and a user account to a server, and meanwhile the user device sends an ID of the user device and the user account to the server. The server binds the home appliance, the user device and the user account according to the ID of the home appliance, the ID of the user device and the user account.

### Fourth Approach

The home appliance sends an ID of the home appliance and a user account to a server via the user device, and meanwhile the user device sends an ID of the user device and the user account to the server. The server binds the wearable device, the user device and the user account according to the ID of the home appliance, the ID of the user device and the user account.

It shall be explained supplementally that, in the implementation environment as shown in Fig. 1B, a binding relationship between the wearable device and the home appliance may be established in advance. Thus, the home appliance may only receive the remote control signal from a bound wearable device.

In the embodiments of the present invention, the binding between a wearable device and a home appliance may be implemented by any one of the following four approaches.

### First Approach

The home appliance obtains an ID of the wearable device and binds the ID with the home appliance itself. The ID of the wearable device may be a two-dimension code adhered to the outside surface of the wearable device, and the home appliance may obtain the ID of the wearable device by scanning the two-dimension code.

### Second Approach

The wearable device sends an ID of the wearable device and a user account to a server, and meanwhile the home appliance sends an ID of the home appliance and the user account to the server. The server binds the wearable device, the home appliance and the user account according to the ID of the wearable device, the ID of the home appliance and the user account.

### Third Approach

The wearable device sends an ID of the wearable device and a user account to a server via a bound relay terminal, and meanwhile the home appliance sends an ID of the home appliance and the user account to the server. The server binds the wearable device, the home appliance and the user account according to the ID of the wearable device, the ID of the home appliance and the user account.

### Fourth Approach

The wearable device sends an ID of the wearable device and a user account to a server via the home appliance, and meanwhile the home appliance sends an ID of the home appliance and the user account to the server. The server binds the wearable device, the home appliance and the user account according to the ID of the wearable device, the ID of the home appliance and the user account.

In the above four approaches, an ID of a wearable device may be used for uniquely identifying the wearable device, and ID of a home appliance may be used for uniquely identifying the home appliance. The user account sent from the wearable device to the server and the user account sent from the home appliance to the server may be the same.

Embodiments of the device of the present invention for executing the methods of the present invention will be described below. For the undisclosed details of the embodiments of the device of the present invention, please see the embodiments of the methods of the present invention.

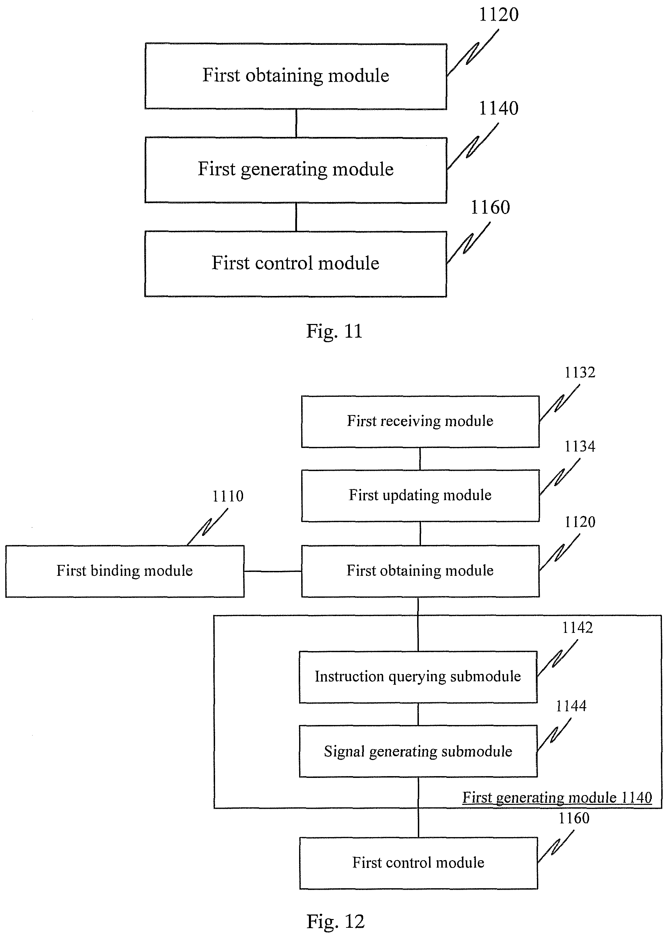

Fig. 11 is a block diagram showing a device for remote control according to another exemplary embodiment. The device for remote control may be implemented as a part or whole of a user device by software, hardware or the combination thereof. The user device is capable of communicating with a wearable device and a home appliance. The device for remote control may include:
a first obtaining module 1120 configured to obtain motion data generated by a wearable device according to a user's motion;
a first generating module 1140 configured to generate a remote control signal for controlling a home appliance according to the motion data; and
a first control module 1160 configured to send the remote control signal to the home appliance, the remote control signal being configured to control operation status of the home appliance.

In conclusion, in the device for remote control provided by the present embodiment, motion data is generated by collecting a user's motion through a wearable device, and then a user device generates a remote control signal for controlling a home appliance according to the motion data and sends the remote control signal to the home appliance. Thus, the problem of cumbersome operation steps in remote control method in related arts is solved. Consequently, only by performing a user's motion through a wearable device, a user may remotely control a home appliance.

Fig. 12 is a block diagram showing a device for remote control according to another exemplary embodiment. The device for remote control may be implemented as a part or whole of a user device by software, hardware or the combination thereof. The user device is capable of communicating with a wearable device and a home appliance. The device for remote control may include:
a first obtaining module 1120 configured to obtain motion data generated by a wearable device according to a user's motion;
a first generating module 1140 configured to generate a remote control signal for controlling a home appliance according to the motion data; and
a first control module 1160 configured to send the remote control signal to the home appliance, the remote control signal being configured to control operation status of the home appliance.

In an embodiment, the first generating module 1140 includes:
an instruction querying submodule 1142 configured to query a control instruction corresponding to the motion data from a preset correspondence which comprises at least one piece of motion data and a control instruction corresponding to each of the motion data; and
a signal generating submodule 1144 configured to generate the remote control signal for controlling the home appliance according to the control instruction.

In an embodiment, the device further includes:
a first receiving module 1132 configured to receive an operation for control instruction setting which is configured to set the motion data and the control instruction corresponding to the motion data; and
a first updating module 1134 configured to generate or update the correspondence according to the motion data and the control instruction corresponding to the motion data.

In an embodiment, the device further includes:
a first binding module 1110 configured to establish a binding relationship with the wearable device in advance.

In an embodiment, the first control module 1160 is configured to send the remote control signal to the home appliance via a wired network; or
the first control module 1160 is configured to send the remote control signal to the home appliance via a WIFI network; or
the first control module 1160 is configured to send the remote control signal to the home appliance via an infrared technology; or
the first control module 1160 is configured to send the remote control signal to the home appliance via a Bluetooth technology.

In conclusion, in the device for remote control provided by the present embodiment, motion data is generated by collecting a user's motion through a wearable device, and then a user device generates a remote control signal for controlling a home appliance according to the motion data and sends the remote control signal to the home appliance. Thus, the problem of cumbersome operation steps in remote control method in related arts is solved. Consequently, only by performing a user's motion through a wearable device, a user may remotely control a home appliance without pressing of any button for remote control.

In the device for remote control provided by the present embodiment, by the user defined correspondence between motion data and control instructions, a user may perform remote control on a home appliance by user defined motions.

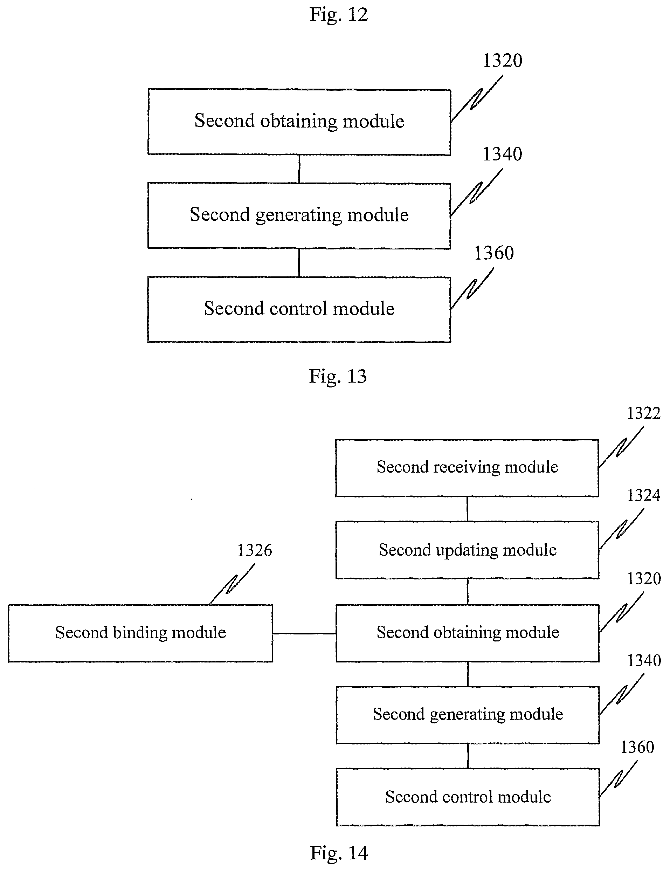

Fig. 13 is a block diagram showing a device for remote control according to another exemplary embodiment. The device for remote control may be implemented as a part or whole of a wearable device by software, hardware or the combination thereof. The device for remote control may include: a second obtaining module 1320 configured to collect motion data generated from a user's motion; a second generating module 1340 configured to generate, according to the motion data, a control instruction corresponding to the motion data; and
a second control module 1360 configured to send a remote control signal to a home appliance according to the control instruction.

In conclusion, in the device for remote control provided by the present embodiment, motion data is generated by collecting a user's motion through a wearable device, and then a home appliance is remotely controlled according to a control instruction corresponding to the motion data. Thus, the problem of cumbersome operation steps in remote control method in related arts is solved. Consequently, only by performing a user's motion through a wearable device, a user may remotely control a home appliance.

Fig. 14 is a block diagram showing a device for remote control according to another exemplary embodiment. The device for remote control may be implemented as a part or whole of a wearable device by software, hardware or the combination thereof. The device for remote control may include: a second obtaining module 1320 configured to collect motion data generated from a user's motion; a second generating module 1340 configured to generate, according to the motion data, a control instruction corresponding to the motion data; and
a second control module 1360 configured to send a remote control signal to a home appliance according to the control instruction, the remote control signal being configured to control operation status of the home appliance.

In an embodiment, the second generating module 1340 is configured to query a control instruction corresponding to the motion data from a preset correspondence which includes at least one piece of motion data and a control instruction corresponding to each of the motion data.

In an embodiment, the device further includes:
a second receiving module 1322 configured to receive an operation for control instruction setting which is configured to set the motion data and the control instruction corresponding to the motion data; and
a second updating module 1324 configured to generate or update the correspondence according to the motion data and the control instruction corresponding to the motion data.

In an embodiment, the second control module 1360 is configured to send the control instruction to a user device which generates the remote control signal for controlling the home appliance according to the control instruction and then sends the remote control signal to the home appliance; or
the second control module 1360 is configured to generate the remote control signal in a WIFI form according to the control instruction and send the remote control signal to the home appliance via a WIFI network; or
the second control module 1360 is configured to generate the remote control signal in an infrared form according to the control instruction and send the remote control signal to the home appliance via an infrared technology; or
the second control module 1360 is configured to generate the remote control signal in a Bluetooth form according to the control instruction and send the remote control signal to the home appliance via a Bluetooth technology.

In an embodiment, the device further includes:
a second binding module 1326 configured to establish a binding relationship with the home appliance in advance.

In conclusion, in the device for remote control provided by the present embodiment, motion data is generated by collecting a user's motion through a wearable device, and then a home appliance is remotely controlled according to a control instruction corresponding to the motion data. Thus, the problem of cumbersome operation steps in remote control method in related arts is solved. Consequently, only by performing a user's motion through a wearable device, a user may remotely control a home appliance without pressing of any button for remote control.

In the device for remote control provided by the present embodiment, by the user defined correspondence between motion data and control instructions, a user may perform remote control on a home appliance by user defined motions.

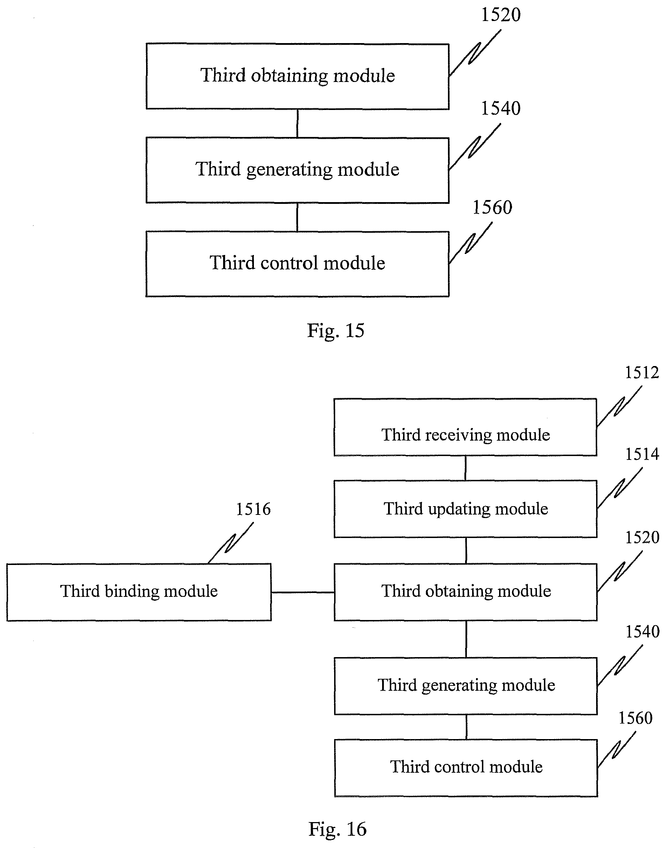

Fig. 15 is a block diagram showing a device for remote control according to another exemplary embodiment. The device for remote control may be implemented as a part or whole of a home appliance by software, hardware or the combination thereof. The device for remote control may include:
a third obtaining module 1520 configured to obtain motion data generated by collecting a user's motion data through a wearable device;
a third generating module 1540 configured to generate, according to the motion data, a control instruction corresponding to the motion data; and
a third control module 1560 configured to execute the control instruction.

In conclusion, in the device for remote control provided by the present embodiment, motion data is generated by collecting a user's motion through a wearable device, and then a home appliance generates a corresponding control instruction according to the motion data and executes this control instruction. Thus, the problem of cumbersome operation steps in remote control method in related arts is solved. Consequently, only by performing a user's motion through a wearable device, a user may remotely control a home appliance without pressing of any button for remote control.

Fig. 16 is a block diagram showing a device for remote control according to another exemplary embodiment. The device for remote control may be implemented as a part or whole of a home appliance by software, hardware or the combination thereof. The device for remote control may include:
a third obtaining module 1520 configured to obtain motion data generated by collecting a user's motion through a wearable device;
a third generating module 1540 configured to generate, according to the motion data, a control instruction corresponding to the motion data; and
a third control module 1560 configured to execute the control instruction.

In an embodiment, the third generating module 1540 is configured to query a control instruction corresponding to the motion data from a preset correspondence which comprises at least one piece of motion data and a control instruction corresponding to each of the motion data.

In an embodiment, the device further includes:
a third receiving module 1512 configured to receive an operation for control instruction setting which is configured to set the motion data and the control instruction corresponding to the motion data; and
a third updating module 1514 configured to generate or update the correspondence according to the motion data and the control instruction corresponding to the motion data.

In an embodiment, the third obtaining module 1520 is configured to receive the motion data sent from a user device, wherein the motion data is sent from the wearable device to the user device; or the third obtaining module 1520 is configured to obtain the motion data collected by the wearable device via a WIFI technology; or
the third obtaining module 1520 is configured to obtain the motion data collected by the wearable device via an infrared technology; or
the third obtaining module 1520 is configured to obtain the motion data collected by the wearable device via a Bluetooth technology.

In an embodiment, the device further includes:
a third binding module 1516 configured to establish a binding relationship with the wearable device in advance.

In conclusion, in the device for remote control provided by the present embodiment, motion data is generated by collecting a user's motion through a wearable device, and then a home appliance generates a corresponding control instruction according to the motion data and executes this control instruction. Thus, the problem of cumbersome operation steps in remote control method in related arts is solved. Consequently, only by performing a user's motion through a wearable device, a user may remotely control a home appliance without pressing of any button for remote control.

In the device for remote control provided by the present embodiment, by the user defined correspondence between motion data and control instructions, a user may perform remote control on a home appliance by user defined motions.

With respect to the devices in the above embodiments, specific operations performed by respective modules have been described in detail in the embodiments of the methods and therefore repeated descriptions are omitted here.

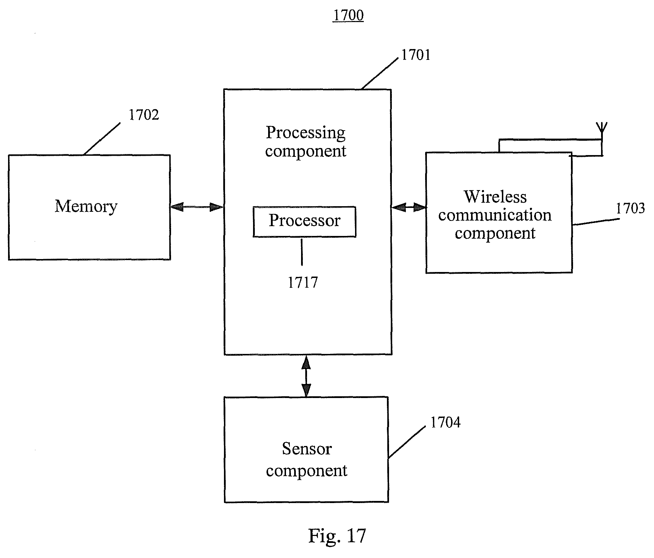

Fig. 17 is a block diagram of a device 1700 for remote control according to another exemplary embodiment. For example, the device 1700 may be a wearable device such as a smart band, a smart watch and the like.

Referring to Fig. 17, the device 1700 may include one or more of the following components: a processing component 1701, a memory 1702, a wireless communication component 1703 and a sensor component 1704.

The processing component 1701 typically controls overall operations of the device 1700. The processing component 1701 may include one or more processors 1717 to execute instructions to perform all or part of the steps in the above described methods. Moreover, the processing component 1701 may include one or more modules which facilitate the interaction between the processing component 1701 and other components. For instance, the processing component 1701 may include a wireless communication module to facilitate the interaction between the wireless communication component 1703 and the processing component 1701.

The memory 1702 is configured to store various types of data to support the operation of the device 1700. Examples of such data include instructions for any applications or methods operated on the device 1700, time data, location data, gestures, etc. The memory 1702 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The wireless communication component 1703 is configured to facilitate communication between the device 1700 and other devices. The device 1700 can access a wireless network based on a communication standard, including but not limited to WiFi, Bluetooth or infrared. In one exemplary embodiment, the wireless communication component 1703 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

The sensor component 1704 includes one or more sensors to provide status assessments of various aspects of the device 1700. For instance, the sensor component 1704 may detect an open/closed status of the device 1700, relative positioning of components of the device 1700, a change in position of the device 1700 or a component of the device 1700, a presence or absence of user contact with the device 1700, an orientation or an acceleration/deceleration of the device 1700, and a change emperature of the device 1700. The sensor component 1704 may include a proximity sensor configured to detect the presence of nearby objects without any physical contact. The sensor component 1704 may also include a health data sensor for collecting health data of a user. The sensor component 1704 may also include a gesture sensor for collecting gestures of a user. In some embodiments, the sensor component 1704 may also include an accelerometer sensor, a gyroscope sensor, a magnetic sensor, a pressure sensor, a temperature sensor, a pedometer, a heart rate sensor, an electronic compass sensor and the like.

In exemplary embodiments, the device 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods for remote control on the wearable device side.

In exemplary embodiments, there is also provided a non-transitory computer-readable storage medium including instructions, such as included in the memory 1702, executable by the processor 1717 in the device 1700, for performing the above methods. For example, the non-transitory computer-readable storage medium may be a ROM, a RAM, a CD-ROM, a magnetic tape, a floppy disc, an optical data storage device, and the like.

There is also provided a non-transitory computer-readable storage medium including instructions when executed by the processor in the device 1700, causing the device 1700 to perform the methods for remote control on the wearable device side.

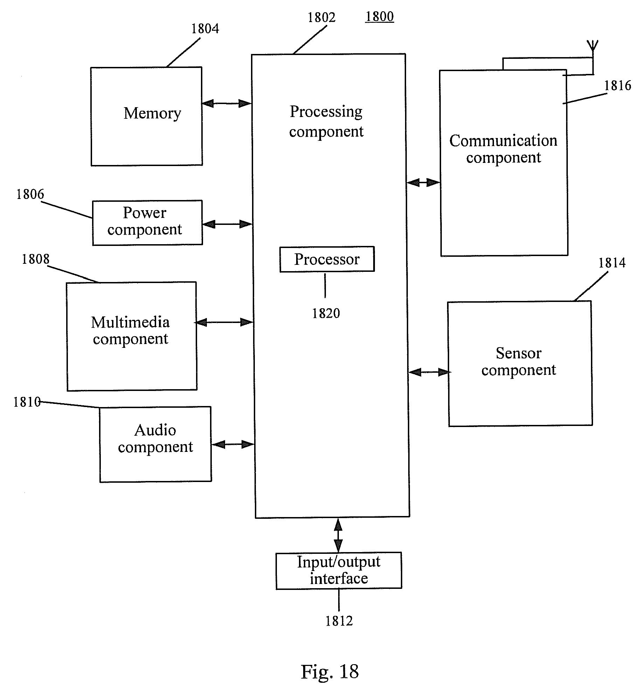

Fig. 18 is a block diagram of a device 1800 for remote control according to another exemplary embodiment. For example, the device 1800 may be a user device such as a mobile phone, a computer, a tablet, a router, a personal digital assistant, and the like.

Referring to Fig. 18, the device 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the device 1800, such as the operations associated with display, telephone calls, data communications, camera operations, and recording operations. The processing component 1802 may include one or more processors 1820 to execute instructions to perform all or part of the steps in the above described methods. Moreover, the processing component 802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the device 1800. Examples of such data include instructions for any applications or methods operated on the device 1800, contact data, phonebook data, messages, pictures, video, etc. The memory 1804 may be implemented using any type of volatile or non-volatile memory devices, or the combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the device 1800. The power component 1806 may include a power management system, one or more power sources, and other components associated with the generation, management, and distribution of power in the device 1800.

The multimedia component 1808 includes a screen providing an output interface between the device 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the device 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the device 1800. For instance, the sensor component 1814 may detect an open/closed status of the device 1800, relative positioning of components, e.g., the display and the keypad, of the device 1800, a change in position of the device 1800 or a component of the device 1800, a presence or absence of user contact with the device 1800, an orientation or an acceleration/deceleration of the device 1800, and a change in temperature of the device 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the device 1800 and other devices. The device 1800 can access a wireless network based on a communication standard, such as WiFi, 2G, or 3G, or a combination thereof. In one exemplary embodiment, the communication component 1816 receives a broadcast signal or broadcast associated information from an external broadcast management system via a broadcast channel. In one exemplary embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for remote control on the user device side.

In exemplary embodiments, there is also provided a non-transitory computer-readable storage medium including instructions, such as included in the memory 1804, executable by the processor 1820 in the device 1800, for performing the above-described methods. For example, the non-transitory computer-readable storage medium may be a ROM, a RAM, a CD-ROM, a magnetic tape, a floppy disc, an optical data storage device, and the like.

There is also provided a non-transitory computer-readable storage medium including instructions when executed by the processor in the device 1800, causing the device 1800 to perform the methods for remote control on the user device side.

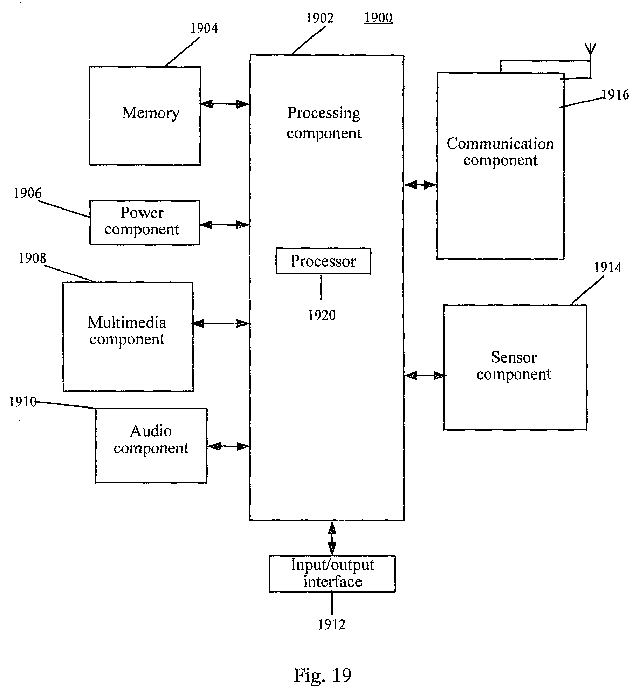

Fig. 19 is a block diagram of a device 1900 for remote control according to another exemplary embodiment. For example, the device 1900 may be a home appliance such as a smart TV, an air conditioner, a washing machine, or a refrigretor and the like.

Referring to Fig. 19, the device 1900 may include one or more of the following components: a processing component 1902, a memory 1904, a power component 1906, a multimedia component 1908, an audio component 1910, an input/output (I/O) interface 1912, a sensor component 1914, and a communication component 1916.

The processing component 1902 typically controls overall operations of the device 1900, such as the operations associated with display, telephone calls, data communications, camera operations, and recording operations. The processing component 1902 may include one or more processors 1920 to execute instructions to perform all or part of the steps in the above described methods. Moreover, the processing component 1902 may include one or more modules which facilitate the interaction between the processing component 1902 and other components. For instance, the processing component 1902 may include a multimedia module to facilitate the interaction between the multimedia component 1908 and the processing component 1902.

The memory 1904 is configured to store various types of data to support the operation of the device 1900. Examples of such data include instructions for any applications or methods operated on the device 1900, contact data, phonebook data, messages, pictures, video, etc. The memory 1904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1906 provides power to various components of the device 1900. The power component 1906 may include a power management system, one or more power sources, and other components associated with the generation, management, and distribution of power in the device 1900.

The multimedia component 1908 includes a screen providing an output interface between the device 1900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1908 includes a front camera and/or a rear camera. The front camera and/or the rear camera may receive an external multimedia datum while the device 1900 is in an operation mode, such as a photographing mode or a video mode. Each of the front camera and the rear camera may be a fixed optical lens system or have focus and optical zoom capability.

The audio component 1910 is configured to output and/or input audio signals. For example, the audio component 1910 includes a microphone ("MIC") configured to receive an external audio signal when the device 1900 is in an operation mode, such as a call mode, a recording mode, and a voice recognition mode. The received audio signal may be further stored in the memory 1904 or transmitted via the communication component 1916. In some embodiments, the audio component 1910 further includes a speaker to output audio signals.

The I/O interface 1912 provides an interface between the processing component 1902 and peripheral interface modules, such as a keyboard, a click wheel, buttons, and the like. The buttons may include, but are not limited to, a home button, a volume button, a starting button, and a locking button.

The sensor component 1914 includes one or more sensors to provide status assessments of various aspects of the device 1900. For instance, the sensor component 1914 may detect an open/closed status of the device 1900, relative positioning of components, e.g., the display and the keypad, of the device 1900, a change in position of the device 1900 or a component of the device 1900, a presence or absence of user contact with the device 1900, an orientation or an acceleration/deceleration of the device 1900, and a change in temperature of the device 1900. The sensor component 1914 may include a proximity sensor configured to detect the presence of nearby objects without any physical contact. The sensor component 1914 may also include a light sensor, such as a CMOS or CCD image sensor, for use in imaging applications. In some embodiments, the sensor component 1914 may also include an accelerometer sensor, a gyroscope sensor, a magnetic sensor, a pressure sensor, or a temperature sensor.

The communication component 1916 is configured to facilitate communication, wired or wirelessly, between the device 1900 and other devices. The device 1900 can access a wireless network based on a communication standard, such as WiFi, 2G, or 3G, or a combination thereof. In one exemplary embodiment, the communication component 1916 receives a broadcast signal or broadcast associated information from an external broadcast management system via a broadcast channel. In one exemplary embodiment, the communication component 1916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for remote control on the home appliance side.

In exemplary embodiments, there is also provided a non-transitory computer-readable storage medium including instructions, such as included in the memory 1904, executable by the processor 1920 in the device 1900, for performing the above-described methods. For example, the non-transitory computer-readable storage medium may be a ROM, a RAM, a CD-ROM, a magnetic tape, a floppy disc, an optical data storage device, and the like.

There is also provided a non-transitory computer-readable storage medium including instructions when executed by the processor in the device 1900, causing the device 1900 to perform the methods for remote control on the home appliance side.

Other embodiments of the present invention will be apparent to those skilled in the art from consideration of the specification and practice of the invention disclosed here. This application is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for remote control intended to be executed by a user terminal and comprising the steps of:
obtaining (201, 304) motion data generated by a wearable device according to a user's motion;
generating (202) a remote control signal for controlling a home appliance according to the motion data; and
sending (203, 306) the remote control signal to the home appliance, the remote control signal being configured to control operation status of the home appliance.

2. The method according claim 1, wherein sending (203, 306) the remote control signal to the home appliance comprises:
sending the remote control signal to the home appliance via a wired network; or
sending the remote control signal to the home appliance via a wireless fidelity WIFI network; or
sending the remote control signal to the home appliance via an infrared technology; or
sending the remote control signal to the home appliance via a Bluetooth technology.

3. A method for remote control intended to be executed by a wearable device and comprising the steps of:
collecting (303, 501, 603) motion data generated from a user's motion;
generating (502), according to the motion data, a control instruction corresponding to the motion data; and
sending (503, 605) a remote control signal to a home appliance according to the control instruction, the remote control signal being configured to control operation status of the home appliance.

4. The method according to claim 2, wherein sending (503, 605) the remote control signal to the home appliance by the wearable device according to the motion data comprises:
sending the control instruction to a user device which generates the remote control signal for controlling the home appliance according to the control instruction and then sends the remote control signal to the home appliance; or
generating the remote control signal in a wireless fidelity WIFI form according to the control instruction and sending the remote control signal to the home appliance via a WIFI network; or
generating the remote control signal in an infrared form according to the control instruction and sending the remote control signal to the home appliance via an infrared technology; or
generating the remote control signal in a Bluetooth form according to the control instruction and sending the remote control signal to the home appliance via a Bluetooth technology.

5. A method for executing a control instruction intended to be executed by a home appliance and comprising the steps of:
obtaining (801) motion data generated by collecting a user's motion through a wearable device;
generating (802), according to the motion data, a control instruction corresponding to the motion data; and
executing (803) the control instruction.

6. The method according to claim 5, wherein obtaining (801) motion data generated by collecting a user's motion data through the wearable device comprises:
receiving the motion data sent from a user device, wherein the motion data is sent from the wearable device to the user device; or
obtaining the motion data collected by the wearable device via a wireless fidelity WIFI technology; or
obtaining the motion data collected by the wearable device via an infrared technology; or
obtaining the motion data collected by the wearable device via a Bluetooth technology.

7. The method according to claim 1, 3 or claim 5, wherein the generation step comprises:
querying (305,604) a control instruction corresponding to the motion data from a preset correspondence which comprises at least one piece of motion data and a control instruction corresponding to each of the motion data.

8. The method according to claim 7, further comprising:
receiving (301,601,901) an operation for control instruction setting which is configured to set the motion data and the control instruction corresponding to the motion data; and
generating or updating (302,602,902) the correspondence according to the motion data and the control instruction corresponding to the motion data.

9. A device for remote control included in a user device and comprising:
an obtaining module (1120) configured to obtain motion data generated by a wearable device according to a user's motion;
a generating module (1140) configured to generate a remote control signal for controlling a home appliance according to the motion data; and
a control module (1160) configured to send the remote control signal to the home appliance, the remote control signal being configured to control operation status of the home appliance.

10. The device according to claim 9 wherein the generating module (1140) comprises:
an instruction querying submodule (1142) configured to query a control instruction corresponding to the motion data from a preset correspondence which comprises at least one piece of motion data and a control instruction corresponding to each of the motion data; and
a signal generating submodule (1144) configured to generate the remote control signal for controlling the home appliance according to the control instruction.

11. The device according to claim 10, further comprising:
a receiving module (1132) configured to receive an operation for control instruction setting which is configured to set the motion data and the control instruction corresponding to the motion data; and
a updating module (1134) configured to generate or update the correspondence according to the motion data and the control instruction corresponding to the motion data.

12. A device for remote control, included in a wearable device and comprising:
an obtaining module (1320) configured to collect motion data generated from a user's motion;
a generating module (1340) configured to generate, according to the motion data, a control instruction corresponding to the motion data; and
a control module (1360) configured to send a remote control signal to a home appliance according to the control instruction, the remote control signal being configured to control operation status of the home appliance.

13. A device for remote control included in a home appliance and comprising:
an obtaining module (1520) configured to obtain motion data generated by collecting a user's motion data through a wearable device;
a generating module (1540) configured to generate, according to the motion data, a control instruction corresponding to the motion data; and
a control module (1560) configured to execute the control instruction.

14. The device according to claim 13, wherein:
the obtaining module (1520) is configured to receive the motion data sent from a user device, wherein the motion data is sent from the wearable device to the user device; or
the obtaining module (1520) is configured to obtain the motion data collected by the wearable device via a wireless fidelity WIFI technology; or
the obtaining module (1520) is configured to obtain the motion data collected by the wearable device via an infrared technology; or
the obtaining module (1520) is configured to obtain the motion data collected by the wearable device via a Bluetooth technology.

15. A computer program including instructions which when being executed on a processor of an apparatus performs the steps of the method according to any of claims 1 to 8.
